# EUROPEAN PATENT APPLICATION

(11) **EP 3 373 697 A1**
(43) Date of publication of application: **12.09.2018**
(21) Application number: 16861887.4
(22) Date of filing: 11.10.2016
(51) Int. Cl.: H04W 88/02, H04W 24/10, H04W 48/16, H04W 72/04

(54) **USER DEVICE, BASE STATION, MEASUREMENT METHOD, AND MEASUREMENT-CONDITION NOTIFICATION METHOD**

(30) Priority: 06.11.2015 JP 2015218986
(71) Applicant: NTT Docomo, Inc., Tokyo 100-6150 (JP)
(72) Inventor: TESHIMA, Kunihiko, Tokyo 100-6150 (JP); TAKAHASHI, Hideaki, Tokyo 100-6150 (JP); UMEDA, Hiromasa, Tokyo 100-6150 (JP); ABETA, Sadayuki, Tokyo 100-6150 (JP)
(74) Representative: Hoffmann Eitle
(86) International application number: PCT/JP2016/080087
(87) International publication number: WO 2017/077820

(57) **Abstract**

There is provided a user apparatus of a radio communication system, the user apparatus including a speed measuring unit configured to measure a moving speed of the user apparatus; and a quality measuring unit configured to detect a cell or to measure reception quality of the cell in accordance with a measurement condition corresponding to the measured moving speed of the user apparatus, based on the measurement condition permitted for detecting the cell or permitted for measuring the reception quality of the cell, the measurement condition being defined depending on the moving speed of the user apparatus, and based on the moving speed of the user apparatus measured by the speed measuring unit.

## Description

### TECHNICAL FIELD

The present invention relates to a user apparatus, a base station, a measurement method, and a measurement condition reporting method.

### BACKGROUND ART

In the LTE (Long Term Evolution) system, carrier aggregation (CA: Carrier Aggregation) is adopted in which communication is performed using a plurality of carriers simultaneously with a predetermined bandwidth (maximum 20 MHz) as a basic unit. In carrier aggregation, a carrier serving as a basic unit is called a component carrier (CC: Component Carrier).

To perform CA, a PCell (Primary Cell) and an SCell (Secondary Cell) are configured for the user apparatus. The PCell is a highly reliable cell for securing connectivity, and the SCell is an additional cell. The user apparatus initially connects to the PCell and optionally adds the SCell. The PCell is similar to a single cell supporting RLM (Radio Link Monitoring), SPS (Semi-Persistent Scheduling), and the like.

The SCell is added to the PCell and configured for the user apparatus. The addition and deletion of the SCell is performed by RRC (Radio Resource Control) signaling. The SCell is a cell that can be enabled for communication (schedulable) for the first time by activation, as the SCell is in an inactive state (deactivate state) immediately after the SCell is established for the user apparatus.

### RELATED ART DOCUMENTS

### [NON-PATENT DOCUMENTS]

[NON-PATENT DOCUMENT 1] 3GPP TS 36.331 V12.7.0 (2015-09)
[NON-PATENT DOCUMENT 2] 3GPP TS 36.133 V13.0.0 (2015-07)

### SUMMARY OF THE INVENTION

### PROBLEM TO BE SOLVED BY THE INVENTION

The user apparatus measures reception quality for a cell with a frequency indicated by Measurement objects reported by RRC signaling, and reports the measured reception quality to the base station eNB at a predetermined timing.

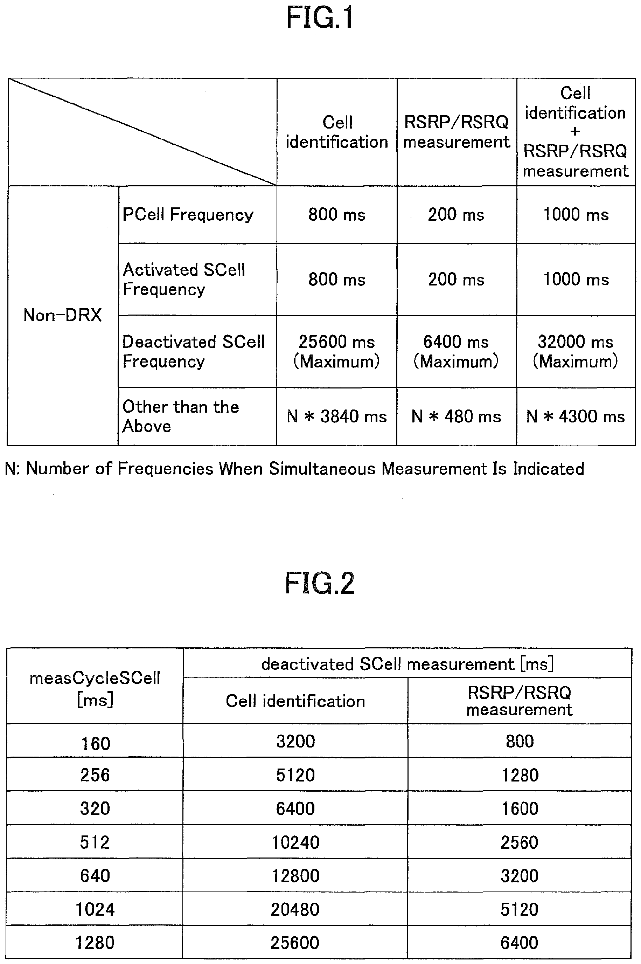

The following describes, with reference to FIG. 1 and FIG. 2, measurement conditions for the user apparatus in a CA state to measure the reception quality. Such measurement conditions are defined in Non-Patent Document 2. In FIG. 1, "Cell identification" indicates a time allowed for detecting a cell (e.g., an adjacent cell) other than a serving cell. "RSRP/RSRQ measurement" indicates a time allowed for measuring RSRP (Reference Signal Receiving Power) or RSRQ (Reference Signal Receiving Quality) in the serving cell or the detected cell. "Other than the above" in FIG. 1 indicates measurement conditions for detecting and/or for measuring quality of another cell with a frequency (inter-frequency) that differs from those of the PCell and the SCell.

Note that, as for the measurement conditions for a user apparatus that is not in the CA state to detect and/or to measure quality of a cell, Non-Patent Document 2 specifies similar measurement conditions. Measurement conditions for cells having the same frequency (Intra-frequency) as that of the serving cell are the same as the measurement conditions for "PCell frequency" in FIG. 1, and measurement conditions for cells with a frequency (Inter-frequency) other than that of the serving cell are the same as the measurement conditions for "Other than the above" in FIG. 1.

FIG. 2 illustrates details of measurement conditions relating to the frequency of the SCell (Deactivated SCell) in an inactive state. When the SCell in the inactive state, the measurement conditions are uniquely determined corresponding to the configured value of "measCycleSCell" reported from the base station to the user apparatus by the RRC message. More specifically, "Cell identification" is "measCycleSCell" × 20, and "RSRP/RSRQ measurement" is "measCycleSCell" × 5. That is, the time related to the "frequency of Deactivated SCell" in FIG. 1 indicates the time related to a case where the "measCycleSCell" is 1280 ms.

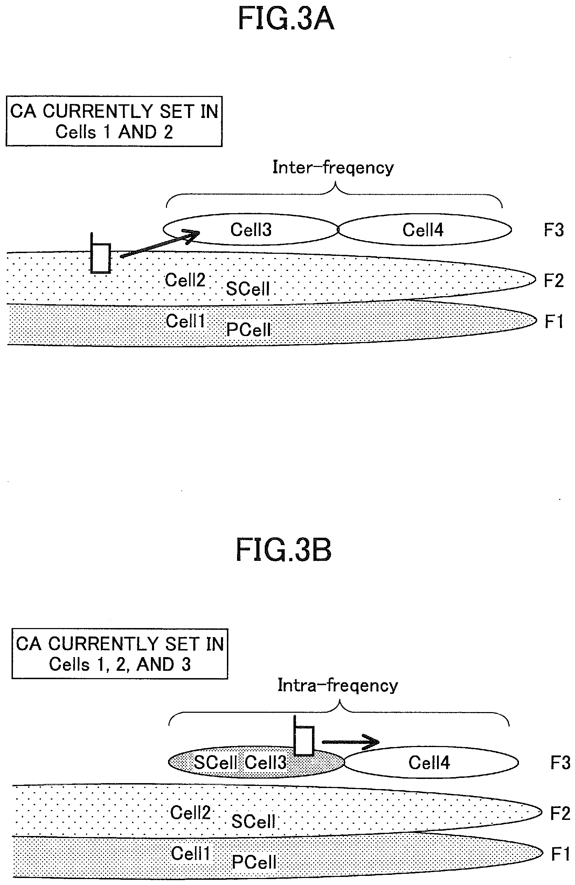

FIGS. 3A and 3B depict definitions of Intra-frequency and Inter-frequency. As illustrated in FIG. 3A, when the user apparatus performs CA using Cell 1 and Cell 2, the frequency F3 including Cell 3 and Cell 4 corresponds to "Inter-frequency". That is, the measurement conditions relating to "other than above" of FIG. 1 are applied as the measurement conditions for the user apparatus to measure the quality of Cell 3 and Cell 4 in a state of FIG. 3A.

In contrast, when Cell 3 is added to CA as illustrated in FIG. 3B, the frequency F3 including Cell 3 and Cell 4 corresponds to "Intra-frequency". That is, the measurement conditions relating to either "Activated SCell Frequency" or "Deactivated SCell Frequency" in FIG. 1 are applied as the measurement conditions for the user apparatus to measure the quality of Cell 3 and Cell 4 in a state of FIG. 3B.

Note that when the user apparatus is moving at a low speed (or when the user apparatus is stopped), change in the reception quality of each cell is slow (or the reception quality may almost not change at all). Hence, when the user apparatus is moving at a low speed (or when the user apparatus is stopped), even if the above measurement conditions are relaxed, the effect on the communication quality may be small. Further, the measurement conditions being relaxed may provide the benefit of reduction in the power consumption of the user apparatus. That is, when the user apparatus is moving at a low speed (or when the user apparatus is stopped), the power consumption of the user apparatus may be reduced by relaxing the measurement conditions.

In LTE specifications up to Release 12, the maximum number of configurable CCs (component carriers) per user apparatus is five. In contrast, in LTE Release 13, CA (carrier aggregation) capable of configuring the maximum number of CCs up to 32 has been studied. The user apparatus needs to measure the frequencies of the configured CCs as Intra-frequency. Hence, the power consumption required for the quality measurement increases, as the number of the configurable CCs increases. Accordingly, the effect of reducing the power consumption can be enhanced by relaxing the measurement conditions.

In contrast, when the user apparatus is moving at a high speed, change in the reception quality in each cell may become significant. Hence, when the user apparatus is moving at a high speed, by additionally tightening the above measurement conditions, it is considered that the communication quality can be enhanced.

The above effect is also assumed to be obtainable in the same manner in communications without performing the carrier aggregation.

The disclosed technology is developed in view of the above-mentioned points, and an object is to provide a technique capable of changing measurement conditions for detecting a cell and for measuring reception quality of the cell in accordance with the moving speed of the user apparatus.

### MEANS FOR SOLVING THE PROBLEM

A user apparatus according to the disclosed technology is a user apparatus of a radio communication system. The user apparatus includes a speed measuring unit configured to measure a moving speed of the user apparatus; and a quality measuring unit configured to detect a cell or to measure reception quality of the cell in accordance with a measurement condition corresponding to the measured moving speed of the user apparatus, based on the measurement condition permitted for detecting the cell or permitted for measuring the reception quality of the cell, the measurement condition being defined depending on the moving speed of the user apparatus, and based on the moving speed of the user apparatus measured by the speed measuring unit.

Further, a base station according to the disclosed technology is a base station of a radio communication system. The base station includes a generating unit configured to generate configuration information including a measurement condition permitted for detecting a cell or permitted for measuring reception quality of the cell, the measurement condition being defined depending on a moving speed of a user apparatus; and a transmitter configured to transmit the configuration information to the user apparatus.

### ADVANTAGEOUS EFFECT OF THE PRESENT INVENTION

According to the disclosed technology, there is provided a technique that allows the measurement conditions for detecting the cell and for measuring the reception quality of the cell to be changed in accordance with the moving speed of the user apparatus.

### BRIEF DESCRIPTION OF THE DRAWINGS

FIG. 1 is a diagram illustrating measurement conditions for measuring quality;
FIG. 2 is a diagram illustrating measurement conditions for measuring quality;
FIG. 3A is a diagram illustrating measurement conditions for measuring quality;
FIG. 3B is a diagram illustrating measurement conditions for measuring quality;
FIG. 4 is a diagram illustrating a configuration of a radio communication system according to an embodiment;
FIG. 5 is a sequence diagram illustrating operations of the radio communication system according to the embodiment;
FIG. 6 is a diagram illustrating an example of configuration information;
FIG. 7 is a diagram illustrating an example of an RRC message according to a first embodiment;
FIG. 8A is a diagram illustrating an example of an RRC message according to the first embodiment;
FIG. 8B is a diagram illustrating an example of the RRC message according to the first embodiment;
FIG. 9 is a diagram illustrating an example of the RRC message according to the first embodiment;
FIG. 10A is a diagram illustrating an example of the RRC message according to the first embodiment;
FIG. 10B is a diagram illustrating an example of the RRC message according to the first embodiment;
FIG. 11 is a diagram illustrating a functional configuration example of a base station according to the embodiment;
FIG. 12 is a diagram illustrating a functional configuration example of a user apparatus according to the embodiment;
FIG. 13 is a diagram illustrating a hardware configuration example of the base station according to the embodiment; and
FIG. 14 is a diagram illustrating a hardware configuration example of the user apparatus according to the embodiment.

### EMBODIMENTS FOR CARRYING OUT THE INVENTION

The following describes embodiments of the present invention with reference to the accompanying drawings. Note that the embodiments described below are merely examples and the embodiments to which the present invention is applied are not limited to the following embodiments. For example, it is assumed that a radio communication system according to the present embodiment supports LTE including LTE-Advanced; however, the present invention is not limited to LTE, and the present invention may also be applied to other schemes with which CA is performed. In addition, the present invention may also be applicable to a radio communication system called fifth generation (5G).

The present invention may be applied to both communication using CA and communication not using CA. In addition, the CA according to the present embodiment includes not only Intra-eNB CA but also includes Inter-eNB CA such as DC (Dual Connectivity). When the present invention is applied to communication using CA, the present invention is applicable to any of Interband CA, Intra-band-non-contiguous CA, and Intra-band contiguous CA.

In the following description, the term "measurement condition" is, unless otherwise specified, used to indicate the meaning including "time allowed for detecting a cell" and/or "time allowed for measuring reception quality of a cell". Further, "measuring the reception quality of a cell" is, unless otherwise specified, used to indicate the meaning including "measuring the reception quality of the serving cell" and/or "detecting a cell other than the serving cell and measuring the reception quality of the detected cell".

### <SYSTEM CONFIGURATION AND OPERATIONAL OVERVIEW>

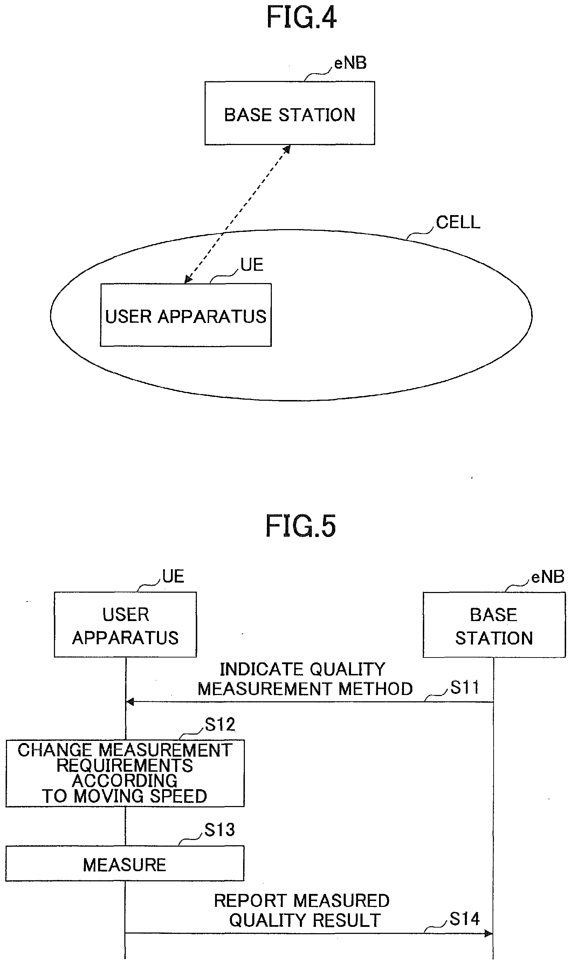

FIG. 4 is a diagram illustrating a configuration of a radio communication system according to an embodiment. The radio communication system according to the present embodiment is an LTE-based radio communication system, and includes, as illustrated in FIG. 4, a user apparatus UE and a base station eNB. The base station eNB, for example, remotely connects an RRE (remote radio device) and may form a small cell and a macro cell. The user apparatus UE and the base station eNB are capable of performing CA. FIG. 4 illustrates one user apparatus UE and one base station eNB each; however, this is merely an example, and there may be two or more user apparatuses UEs and two or more base stations eNBs, respectively. The user apparatus UE may have a capability (dual connectivity) to communicate with two or more base stations eNB simultaneously.

FIG. 5 is a sequence diagram illustrating operations of the radio communication system according to an embodiment. Basic operations of the radio communication system depicted in FIG. 4 are described by referring to FIG. 5.

In step S11, the base station eNB transmits, to the user apparatus UE, a measurement configuration IE (MeasConfigIE) that includes measurement objects indicating frequencies, etc., on which the user apparatus UE is to measure the reception quality and/or a reporting configuration indicating the timing for causing the measured result to be reported, etc.

In step S12, the user apparatus UE measures the moving speed of the user apparatus UE itself, and the user apparatus UE updates (replaces) the configured measurement conditions with measurement conditions that are defined depending on the moving speed of the user apparatus itself.

Note that information indicating the measurement conditions defined depending on the moving speed of the user apparatus UE (hereinafter referred to as "configuration information") may be included in the measurement configuration IE reported from the base station eNB in the process of step S11 or may be reported from the base station eNB to the user apparatus UE by broadcast information (SIB), as described in the first embodiment below. Alternatively or additionally, the "configuration information" may be held in advance in the user apparatus UE, as described in the second embodiment below.

In step S13, the user apparatus UE measures the reception quality of the cell with the frequency indicated by the measurement objects in accordance with the measurement conditions updated (replaced) in step S12.

In step S14, the user apparatus UE transmits the quality measurement result to the base station eNB at a timing specified in advance by the base station eNB. Note that the process of step S14 corresponds to the transmission process of the RRC Measurement Report message specified in the current LTE. Events A1 to A6, B1, B2, C1, and C2 are defined as timings specified in advance by the base station eNB. For example, event A1 indicates a case where the reception quality of the serving cell exceeds a predetermined threshold. Event A2 indicates a case where the reception quality of the serving cell is less than the predetermined threshold. Event A6 indicates a case where the reception quality of a neighboring cell exceeds a value obtained by adding a predetermined offset to the reception quality of the SCell.

The user apparatus UE repeats the process of steps S12 to S14 to measure the reception quality of the cell while changing the measurement conditions according to the moving speed of the user apparatus UE itself.

### <PROCESS FLOW>

Next, details of the processes performed by the user apparatus UE and the base station eNB according to the present embodiment are specifically described separately in the first embodiment and the second embodiment. Note that the user apparatus UE according to the present embodiment is provided with functions according to the first embodiment and the second embodiment, respectively, and the user apparatus UE may determine one of the transmission schemes, for example, based on configuration information from the base station eNB. However, the above-described configuration is merely an example, and the user apparatus UE may support only one of the schemes according to the first embodiment and the second embodiment.

### (FIRST EMBODIMENT)

In the first embodiment, the base station eNB transmits "configuration information" to the user apparatus UE using an RRC message or broadcast information (SIB).

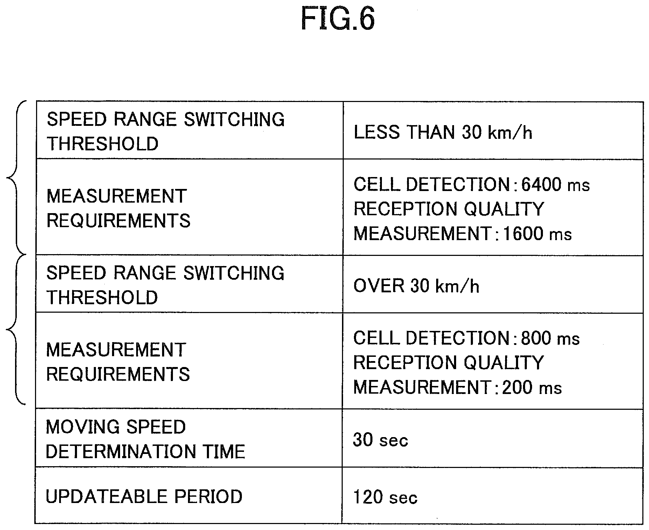

FIG. 6 is a diagram illustrating an example of configuration information. As illustrated in FIG. 6, the configuration information configures a "speed range switching threshold" in association with the "measurement conditions". The "speed range switching threshold" is parameters indicating a range of the moving speeds of the user apparatus UE. The measurement conditions (measurement conditions of detecting a cell and measurement conditions of measuring reception quality) that are permitted for the user apparatus UE moving at a speed within a range determined by the speed range switching threshold are configured in the "measurement conditions." Note that the measurement conditions of detecting a cell are synonymous with "Cell identification" described in FIG. 1. The measurement conditions of measuring reception quality are synonymous with "RSRP/RSRQ measurement" described in FIG. 1. The method of specifying the speed range using the "speed range switching threshold" is merely an example, and the method of specifying the speed range is not limited to this example. For example, a specific speed range may be configured instead of using a threshold.

In the example of FIG. 6, the measurement conditions permitted for the user apparatus UE that moves at a speed that is less than 30 km/h are such that the time allowed for cell detection = 6400 ms, and the time allowed for reception quality measurement = 1600 ms. Similarly, the measurement conditions permitted for the user apparatus UE that moves at a speed that is greater than or equal to 30 km/h are such that the time allowed for cell detection = 800 ms, and the time allowed for reception quality measurement = 200 ms.

In the example of FIG. 6, two pairs of the speed range change threshold" and the "measurement conditions" are configured; however, three or more pairs may be configured. This may enable switching of "measurement conditions" in more detail.

The configuration information may include the "speed range switching threshold" and the "measurement conditions" alone, or the configuration information may further include a "moving speed determination time" and an "updatable period". The "moving speed determination time" indicates a time for the user apparatus UE to determine the moving speed of the user apparatus UE itself. When measuring the moving speed of the user apparatus UE itself, the user apparatus UE determines the mean of the moving speeds within the time set in the "moving speed determination time" as the moving speed of the user apparatus UE itself. In the example of FIG. 6, the user apparatus UE continuously measures the moving speed of the user apparatus UE itself for 30 seconds, and determines the mean of the moving speeds as the moving speed of the user apparatus UE itself. The "updatable period" indicates a time period between the time at which the user apparatus UE sets the measurement conditions and the time at which a next change in the measurement conditions is allowable. The example of the configuration information in FIG. 6 indicates that the user apparatus UE is not allowed to change the measurement conditions until 120 seconds has elapsed once the moving speed of the user apparatus UE itself has been determined and the measurement conditions have been configured. Since the "moving speed determination time" and the "updatable period" are configured in the configuration information, the base station eNB may be able to change the operations of the user apparatus UE in various manners. Further, it may be possible to prevent the measurement conditions from being changed frequently in a short time in a case where the moving speed of the user apparatus UE changes significantly.

### [SUPPLEMENTARY NOTES]

The "measurement conditions" do not necessarily include specific configuration values and may include indices specifying the configuration values. For example, two or more combinations of a specific configuration value and an index may be defined in advance, and only the indices may be configured in the "measurement conditions".

In this embodiment, the "configuration information" may be configured for each of the frequencies to be measured. For example, when transmitting the measurement configuration IE (MeasConfigIE) to the user apparatus UE using the RRC message (RRCConnection Reconfiguration), the base station eNB may configure, in the measurement object IE (MeasConfigEUTRA) included in the measurement configuration IE, the "configuration information" while associating the "configuration information" with the frequency to be measured.

Further, in this embodiment, the "configuration information" may be uniformly configured irrespective of the frequencies to be measured. For example, when the base station eNB transmits the measurement configuration IE (MeasConfigIE) to the user apparatus UE by using the RRC message (RRCConnection Reconfiguration), the base station eNB may apply the "configuration information" to all the Measurement objects by configuring the "configuration information" in the measurement setting IE.

In addition, the base station eNB may transmit the "configuration information" by including the "configuration information" in the broadcast information. As a result, the "configuration information" may be configured commonly to the one or more user apparatuses UEs in the cell.

Further, in the present embodiment, the frequency to which the measurement conditions specified by the "configuration information" is applied may be limited. For example, the measurement conditions specified in the "configuration information" may be applied only at the time of measuring quality at the activated SCell frequency in CA. In this case, for example, the measurement conditions may be configured to be relaxed when the moving speed of the user apparatus UE is low. This may reduce the power consumption of the user apparatus UE for bundling a large number of CCs.

Further, for example, the measurement conditions specified by the "configuration information" may be applied only at the time of measuring the quality at the PCell (including PSCell in DC) frequency and the activated SCell frequency.

Further, the user apparatus UE may be configured to operate in accordance with the usual measurement conditions (the measurement conditions described in FIGS. 1 and 2) when the "configuration information" fails to be received (or not received) from the base station eNB. Further, initial values of the "configuration information" may be pre-configured "Pre-configure" in the user apparatus UE using SIM, etc., in a case where the "configuration information" fails to be received from the base station eNB. The initial values of the "configuration information" may be incorporated in advance in a program, etc., for operating the user apparatus UE itself.

### [STANDARD SPECIFICATION MODIFICATION EXAMPLE (1)]

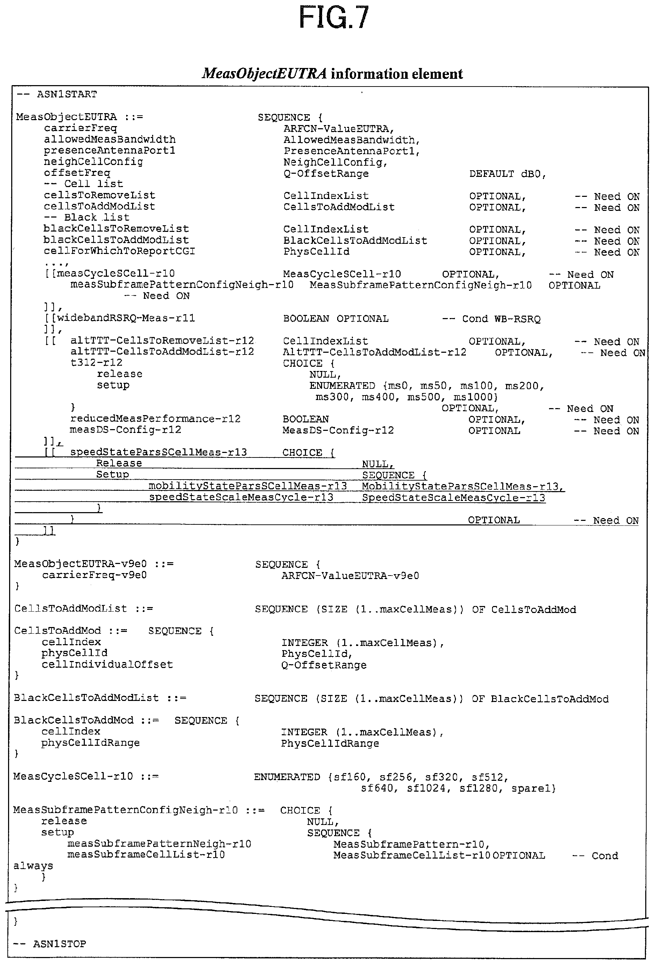

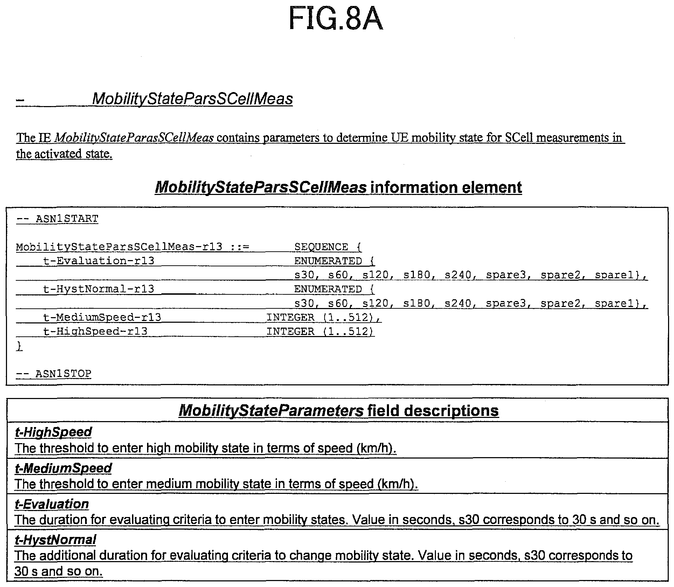

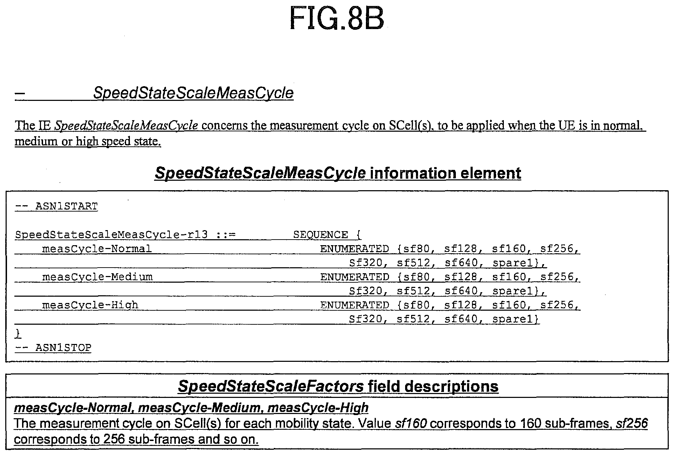

The examples illustrated in FIGS. 7, FIG. 8A, and FIG. 8B illustrate an example of a modification of the standard specification in a case where the "configuration information" is configured for each of the frequencies to be measured, and the measurement conditions specified by the "configuration information" are only applied at the time of measuring the quality at the SCell frequency in CA.

FIG. 7 illustrates an example of a modification in a case where an information element (IE) corresponding to the "configuration information" in the present embodiment is newly added to the measurement object (MeasObjectEUTRA). The underlined part in FIG. 7 indicates a newly added information element. FIGS. 8A and 8B illustrate more detailed information elements of the information element added in FIG. 7.

Specifically, "t-MediumSpeed-r 13" and "t-HighSpeed-r 13" in FIG. 8A correspond to the "speed range switching threshold" in FIG. 6. Likewise, "t-Evaluation" in FIG. 8A corresponds to the "moving speed determination time" in FIG. 6. Further, "t-HystNormal" in FIG. 8A corresponds to the "updatable period" in FIG. 6.

"SpeedStateScaleMeasCycle-r 13" in FIG. 8B corresponds to the "measurement conditions" in FIG. 6. In the example of FIG. 8B, three types of measurement conditions "measCycle-Normal", "measCycle-Medium" and "measCycle-High" are configured.

"MeasCycle-Normal" is a measurement condition to be applied when the moving speed of the user apparatus UE is less than "t-MediumSpeed-r13" in FIG. 8A.

"MeasCycle-Medium" is a measurement condition to be applied when the moving speed of the user apparatus UE is greater than or equal to than "t-MediumSpeed-r13" and less than "t-HighSpeed-r13" in FIG. 8A.

"MeasCycle-high" is a measurement condition to be applied when the moving speed of the user apparatus UE is greater than or equal to "t-HighSpeed-r13" in FIG. 8A.

### [STANDARD SPECIFICATION MODIFICATION EXAMPLE (2)]

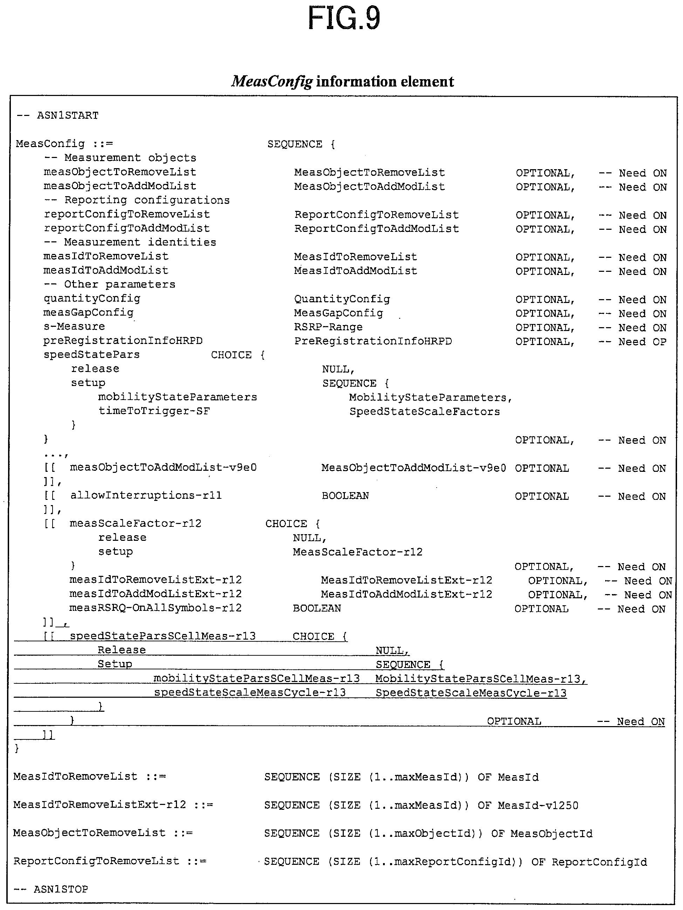

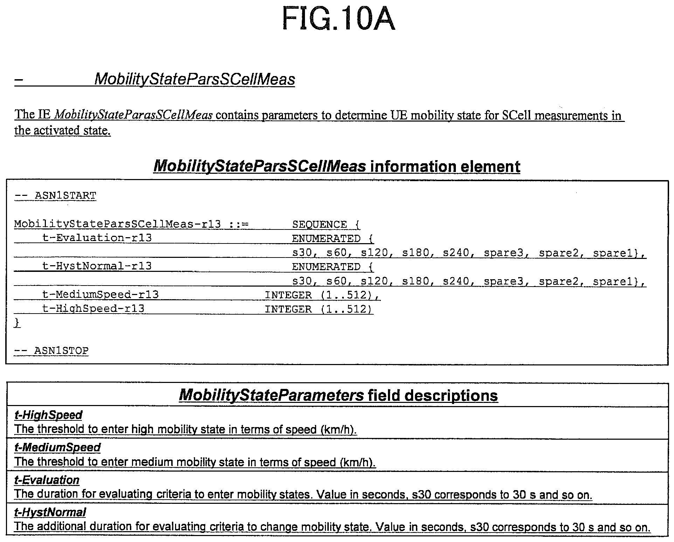

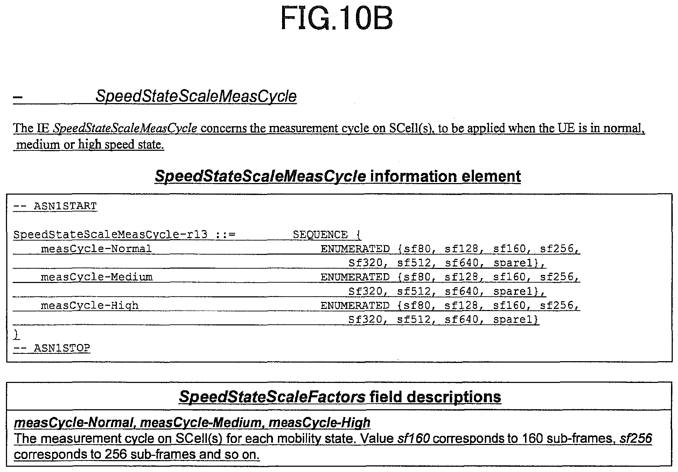

The examples illustrated in FIGS. 9, FIG. 10A, and FIG. 10B illustrate an example of a modification of the standard specification in a case where the "configuration information" is uniformly configured irrespective of the frequencies to be measured, and the measurement conditions specified by the "configuration information" are only applied at the time of measuring the quality at the SCell frequency in CA.

FIG. 9 illustrates an example of a modification in a case where an information element (IE) corresponding to the "configuration information" in the present embodiment is newly added to the measurement configuration (MeasConfigIE). The underlined part in FIG. 9 indicates the newly added information element. FIGS. 10A and 10B illustrate more detailed information elements about the information element added in FIG. 9. Since the information elements in FIGS. 10A and 10B are the same as those in FIGS. 8A and 8B, a description of the information elements in FIGS. 10A and 10B is omitted.

### (SECOND EMBODIMENT)

In the second embodiment, the "configuration information" is held in advance in the user apparatus UE such that the user apparatus UE operates in accordance with the "configuration information" held by the user apparatus UE itself. The "configuration information" may be pre-configured (Pre-configure) in the user apparatus UE using SIM, etc. The information corresponding to the "configuration information" may be incorporated in advance in a program, etc., for operating the user apparatus UE itself. Other elements that are not specifically illustrated are the same as for the first embodiment and a description of these elements is omitted.

Compared to the first embodiment, the second embodiment may be able to reduce the amount of signaling messages from the base station eNB to the user apparatus UE.

### (SUPPLEMENTARY NOTES IN RESPECTIVE EMBODIMENTS)

In each embodiment, the applicability of the "configuration information" may change in accordance with the number of CCs bundled by the user apparatus UE in the CA. For example, when the number of bundled CCs is less than a predetermined number, usual measurement conditions are applied, and when the number of bundled CCs is more than the predetermined number, the measurement conditions according to the first embodiment and the second embodiment may be applied. The predetermined number may be predefined in the standard specifications, etc., may be included in the "configuration information", or may be configured in the user apparatus UE using a dedicated RRC message and/or dedicated broadcast information.

In each embodiment, the user apparatus UE may obtain the moving speed of the user apparatus UE itself from, for example, a vehicle speed sensor of an automobile, etc., on which the user apparatus UE itself is mounted, or by using the positional information of the GPS, etc., included in the user apparatus UE itself. Further, the user apparatus UE may measure or estimate the amount of Doppler shift (fd) using radio waves transmitted from the base station eNB in a predetermined cell, and calculate the moving speed of the user apparatus UE itself by using the amount of the Doppler shift and the frequency of the predetermined cell. The predetermined cell may be a PCell, an SCell, another cell with the same frequency as the PCell or SCell, or a cell with a different frequency from the PCell and SCell. The method for calculating the moving speed of the user apparatus UE is not limited to the above-described examples, and the user apparatus UE may calculate the moving speed of the user apparatus UE itself by using other methods.

The measurement of the reception quality in each embodiment may include the measurement of SINR (RS-SINR) in addition to the measurement of RSRP/RSRQ, or may include the measurement of SINR (RS-SINR) instead of the measurement of RSRP/RSRQ. When the measurement of the reception quality includes the measurement of SINR (RS-SINR), the measurement conditions relating to the measurement of the reception quality indicate a time allowed for measuring RSRP/RSRQ/SINR (RS-SINR).

Note that the measurement of SINR (RS-SINR) indicates measuring SINR of an RS (Reference Signal) included in a PDCCH (Physical Downlink Control Channel) or/and a PDSCH (Physical Downlink Shared Channel). In addition, the target RS for measuring the SINR includes a CRS (Cell-specific Reference Signal) or/and a CSI-RS (Channel State Information-Reference Signal).

### <FUNCTIONAL CONFIGURATION>

The following illustrates functional configurations of the user apparatus UE and the base station eNB that are capable of executing the processes described above.

### (BASE STATION)

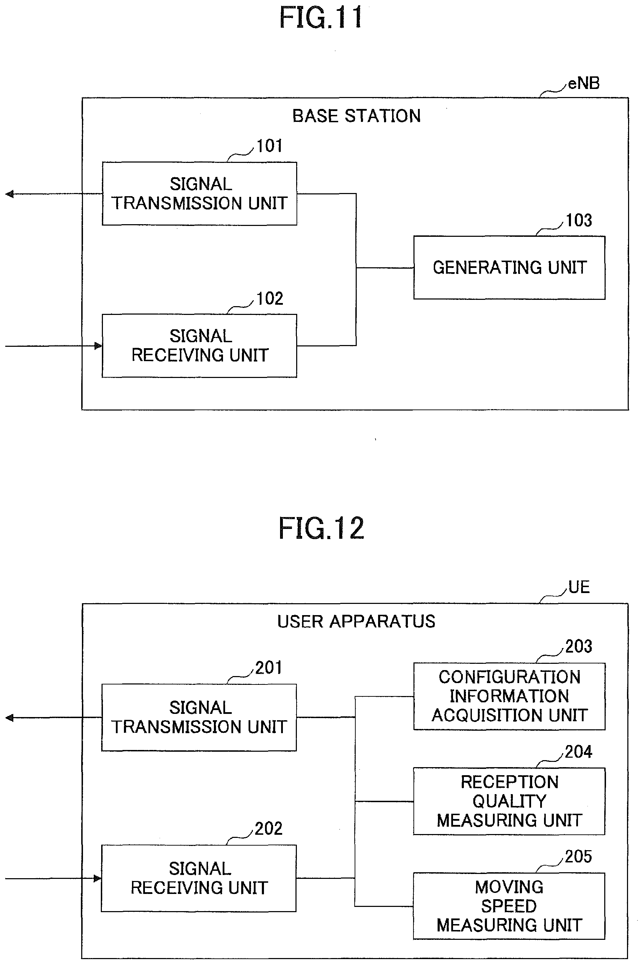

FIG. 11 is a diagram illustrating a functional configuration example of the base station according to the embodiments. As illustrated in FIG. 11, the base station eNB includes a signal transmission unit 101, a signal receiving unit 102, and a generating unit 103. FIG. 11 merely illustrates main functional components of the base station eNB that include not-illustrated functions for performing, at the least, operations conforming to LTE. The functional configuration of the user apparatus UE illustrated in FIG. 11 is only an example. Any functional division and any names of the functional components may be applied insofar as the operations according to the present embodiment may be executed. The user apparatus UE may include only the functions necessary for executing the first embodiment or may include only the functions necessary for executing the second embodiment. The base station eNB may be a single base station eNB or may be either a MeNB or a SeNB when DC is executed in accordance with the configuration (Configuration).

The signal transmission unit 101 includes a function to generate various types of signals of the physical layer from the signals of higher layer to be transmitted from the base station eNB and wirelessly transmit the generated signals. The signal receiving unit 102 includes a function to wirelessly receive various signals from each user apparatus UE and retrieve signals of a higher layer from the received signals of the physical layer. Each of the signal transmission unit 101 and the signal receiving unit 102 includes a function to execute a CA, in which communication is performed by bundling multiple CCs. Each of the signal transmission unit 101 and the signal receiving unit 102 may further include a radio communication unit installed remotely from the main body (a controller) of the base station eNB, such as an RRE.

It is assumed that each of the signal transmission unit 101 and the signal receiving unit 102 includes a packet buffer and performs processes of a layer 1 (PHY), a layer 2 (MAC, RLC and PDCP), and a layer 3 (RRC). However, the functional configurations of the signal transmission unit 101 and the signal receiving unit 102 are not limited to the above-described examples.

The generating unit 103 generates "configuration information", and the generating unit 103 indicates the signal transmission unit 101 to transmit the generated configuration information to the user apparatus UE via the RRC message or broadcast information.

### (USER APPARATUS)

FIG. 12 is a diagram illustrating a functional configuration example of a user apparatus according to the embodiments. As illustrated in FIG. 12, the user apparatus UE includes a signal transmission unit 201, a signal receiving unit 202, a configuration information acquisition unit 203, a reception quality measuring unit 204, and a moving speed measuring unit 205. FIG. 12 merely illustrates the functional configuration particularly related to the embodiments of the present invention in the user apparatus UE, and the user apparatus UE may also include not-illustrated functions for performing, at the least, operations conforming to LTE. The functional configuration of the user apparatus UE illustrated in FIG. 12 is only an example. Any functional division and any names of the functional components may be applied insofar as the operations according to the present embodiment may be executed. The user apparatus UE may include only the functions necessary for executing the first embodiment or may include only the functions necessary for executing the second embodiment.

The signal transmission unit 201 includes a function to generate various types of signals of the physical layer from the signals of higher layer to be transmitted from the user apparatus UE and wirelessly transmit the generated signals. The signal receiving unit 202 includes a function to wirelessly receive various signals from the base station eNB and retrieve signals of a higher layer from the received signals of the physical layer. Each of the signal transmission unit 201 and the signal receiving unit 202 includes a function to execute a CA, in which communication is performed by bundling multiple CCs.

It is assumed that each of the signal transmission unit 201 and the signal receiving unit 202 includes a packet buffer and performs processes of a layer 1 (PHY), a layer 2 (MAC, RLC and PDCP), and a layer 3 (RRC). However, the functional configurations of the signal transmission unit 101 and the signal receiving unit 102 are not limited to the above-described examples.

The configuration information acquisition unit 203 obtains "configuration information" transmitted from the base station eNB and stores the obtained configuration information in a memory or the like.

The reception quality measuring unit 204 uses reference signals, etc., transmitted from the base station eNB to measure the reception quality (RSRP/RSRQ/SINR (RS-SINR), etc.) of these signals. The reception quality measuring unit 204 also transmits a report of the quality measurement result (Measurement Report) to the base station eNB at the timing specified in advance by the base station eNB.

Further, the reception quality measuring unit 204 detects a cell and/or measures reception quality of the cell in accordance with measurement conditions corresponding to the moving speed of the user apparatus UE itself, based on the measurement conditions permitted for detecting a cell or for measuring the reception quality of the cell defined depending on the moving speed of the user apparatus UE, and based on the moving speed of the user apparatus UE itself measured by the moving speed measuring unit 205. In addition, the reception quality measuring unit 204 may change the measurement conditions after the updatable period has elapsed when the moving speed of the user apparatus changes.

The moving speed measuring unit 205 measures the moving speed of the user apparatus UE itself. The moving speed measuring unit 205 may acquire the moving speed from the outside, may measure the moving speed using GPS or the like, or may calculate the moving speed based on the amount of the Doppler shift. The moving speed measuring unit 205 may measure the moving speed of the user apparatus itself within the moving speed determination time.

Each of the functional configurations of the base station eNB and the user apparatus UE described above may be entirely implemented by one or more hardware circuits (for example, one IC chip or multiple IC chips). Alternatively, a part of the functional configuration of each of the base station eNB and the user apparatus UE may be formed of a hardware circuit, and the remaining part may be implemented by a CPU and a program.

### (BASE STATION)

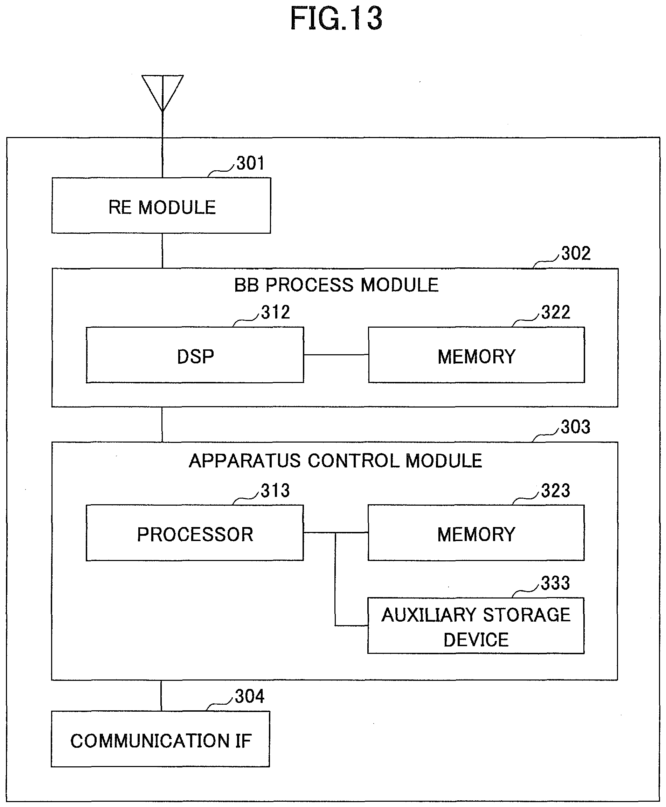

FIG. 13 is a diagram illustrating a hardware configuration example of the base station according to the embodiment. FIG. 13 illustrates a configuration closer to the implemented example than the example illustrated in FIG. 11. As illustrated in FIG. 13, the base station eNB includes an RE (Radio Equipment) module 301 configured to perform a process relating to radio signals, a BB (Base Band) process module 302 configured to perform a baseband signal process, an apparatus control module 303 configured to perform a process of a higher layer and the like, and a communication IF 304 serving as an interface for connecting to a network.

The RE module 301 performs D/A (Digital-to-Analog) conversion, modulation, frequency conversion, power amplification, etc., on the digital baseband signal received from the BB process module 302 to generate a radio signal to be transmitted from an antenna. The RE module 301 also performs frequency conversion, A/D (Analog to Digital) conversion, demodulation, etc., on the received radio signal to generate a digital baseband signal to transfer the generated digital baseband signal to the BB process module 302. The RE module 301 may include, for example, a part of the signal transmission unit 101 and a part of the signal receiving unit 102 illustrated in FIG. 11.

The BB process module 302 is configured to perform a process of mutually converting the IP packet and the digital baseband signal. A DSP (Digital Signal Processor) 312 is a processor configured to perform a signal process in the BB process module 302. The memory 322 is used as a work area of the DSP 312. The BB process module 302 includes, for example, a part of the signal transmission unit 101 and a part of the signal receiving unit 102 illustrated in FIG. 11.

The apparatus control module 303 is configured to perform an IP layer protocol process, an OAM (Operation and Maintenance) process, and the like. The processor 313 is a processor that execute the process executed by the apparatus control module 303. The memory 323 is used as a work area of the processor 313. The auxiliary storage device 333 may, for example, be an HDD or the like, and is configured to store various configuration information and the like for the base station eNB itself to operate. The apparatus control module 303 may, for example, include a part of the signal transmission unit 101, a part of the signal receiving unit 102, and the generating unit 103 illustrated in FIG. 11.

### (USER APPARATUS)

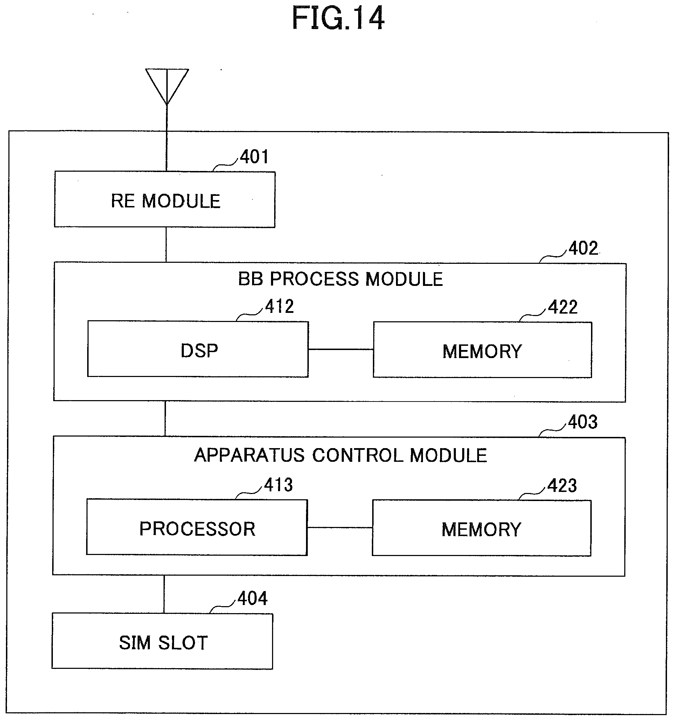

FIG. 14 is a diagram illustrating a hardware configuration example of the user apparatus according to the embodiment. FIG. 14 illustrates a configuration closer to the implemented example than the example illustrated in FIG. 12. As illustrated in FIG. 14, the user apparatus UE includes an RE module 401 configured to perform a process relating to radio signals, a BB process module 402 configured to perform a baseband signal process, an apparatus control module 403 configured to perform a process of a higher layer, etc., and a SIM slot 404 serving as an interface for accessing a SIM card.

The RE module 401 performs D/A conversion, modulation, frequency conversion, power amplification, etc., on the digital baseband signal received from the BB process module 402 to generate a radio signal to be transmitted from an antenna. The RE module 401 also performs frequency conversion, A/D conversion, demodulation, etc., on the received radio signal to generate a digital baseband signal to transfer the generated digital baseband signal to the BB process module 402. The RE module 401 may include, for example, a part of the signal transmission unit 201 and a part of the signal receiving unit 202 illustrated in FIG. 12.

The BB process module 402 is configured to perform a process of mutually converting the IP packet and the digital baseband signal. A DSP (Digital Signal Processor) 412 is a processor configured to perform signal processing in the BB process module 402. The memory 422 is used as a work area of the DSP 412. The BB process module 402 includes, for example, a part of the signal transmission unit 201, a part of the signal receiving unit 202, and a part of the reception quality measuring unit 204 illustrated in FIG. 12.

The apparatus control module 403 is configured to perform an IP layer protocol process, various types of application processes, and the like. The processor 413 is a processor that executes the process to be executed by the apparatus control module 403. The memory 423 is used as a work area of the processor 413. The processor 413 reads data from and writes data into the SIM via the SIM slot 404. The apparatus control module 403 includes, for example, a part of the signal transmission unit 201, a part of the signal receiving unit 202, the configuration information acquisition unit 203, a part of the reception quality measuring unit 204, and the moving speed measuring unit 205 illustrated in FIG. 12.

### <Conclusion>

As described above, according to each embodiment, there is provided a user apparatus of a radio communication system, the user apparatus including a speed measuring unit configured to measure a moving speed of the user apparatus; and a quality measuring unit configured to detect a cell or to measure reception quality of the cell in accordance with a measurement condition corresponding to the measured moving speed of the user apparatus, based on the measurement condition permitted for detecting the cell or permitted for measuring the reception quality of the cell, the measurement condition being defined depending on the moving speed of the user apparatus, and based on the moving speed of the user apparatus measured by the speed measuring unit. According to this user equipment UE, a technique is provided that allows the measurement condition for detecting the cell and the measuring reception quality to be changed in accordance with the moving speed of the user apparatus.

Further, the speed measuring unit may measure the moving speed of the user apparatus within a moving speed determination time; and, upon detecting that the moving speed of the user apparatus changes, the reception quality measuring unit may update the measurement condition after an updatable period has elapsed. As a result, a likelihood can be reduced that the measurement condition is frequently changed in a shot time when the variation of the moving speed of the user apparatus UE is significant.

Further, an acquisition unit may be included that obtains, from a base station, configuration information including the measurement condition, the moving speed determination time, and the updatable period. As a result, the base station eNB is able to indicate the measurement condition to the user apparatus UE, and the base station eNB is able to control the operation of the user apparatus in various manners.

Further, the measurement condition may be defined for each frequency of a cell to be measured. As a result, in the embodiments, the measurement condition can be changed for each frequency.

Further, the measurement condition may be applied to a secondary cell that is in an active state in carrier aggregation. As a result, an operation can be achieved such that the user apparatus UE appropriately changes the measurement condition only for the SCell in the active state. Additionally, the power consumption of the user apparatus UE can be reduced by configuring such that, when the moving speed of of the user equipment UE is low, the measurement condition is to be relaxed.

Further, according to each embodiment, there is provided a base station of a radio communication system, the base station including a generating unit configured to generate configuration information including a measurement condition permitted for detecting a cell or permitted for measuring reception quality of the cell, the measurement condition being defined depending on a moving speed of a user apparatus; and a transmitter configured to transmit the configuration information to the user apparatus. With this base station eNB, a technique is provided that allows the measurement condition for detecting the cell and measuring the reception quality to be changed depending on the moving speed of the user apparatus UE.

Further, according to each embodiment, there is provided a measurement method executed by a user apparatus of a radio communication system, the measurement method including: measuring a moving speed of the user apparatus; and detecting a cell or measuring reception quality of the cell in accordance with a measurement condition corresponding to the measured moving speed of the user apparatus, based on the measurement condition permitted for detecting the cell or permitted for measuring the reception quality of the cell, the measurement condition being defined depending on the moving speed of the user apparatus, and based on the measured moving speed of the user apparatus measured. According to this measurement method, a technique is provided that allows a measurement condition for detecting the cell and measuring the reception quality to be changed in accordance with the moving speed of the user apparatus.

Furthermore, according to each embodiment, there is provided a measurement condition reporting method executed by a base station of a radio communication system, the measurement condition reporting method including: generating configuration information including a measurement condition permitted for detecting a cell or permitted for measuring reception quality of the cell, the measurement condition being defined depending on a moving speed of a user apparatus; and transmitting the configuration information to the user apparatus. According to this measurement condition reporting method, a technique is provided that allows the measurement condition for detecting the cell and measuring the reception quality to be changed depending on the moving speed of the user apparatus UE.

### <ADDITIONAL EMBODIMENTS>

As described above, the configuration of the each apparatus (the user apparatus UE/the base station eNB) described in the embodiments of the present invention may be implemented, in the apparatus provided with the CPU and the memory, by executing a program by the CPU (the processor); the configuration of the each apparatus may be implemented by hardware, such as a hardware circuit provided with a logic of the process described in the embodiment; or the configuration of the each apparatus may be a mixture of a program and hardware.

The embodiments are described as described above; however, the disclosed invention is not limited to these embodiments, and a person skilled in the art would understand various variations, modifications, replacements, or the like. Specific examples of numerical values are used for facilitating understanding of the present invention; however, these numeric values are merely examples and, unless otherwise noted, any appropriate values may be used. In the above description, partitioning of items is not essential to the present invention. Provisions described in more than two items may be combined if necessary. Provisions described in one item may be applied to provisions described in another item (as long as they do not contradict). In a functional block diagram, boundaries of functional units or processing units do not necessarily correspond to physical boundaries of parts. Operations of multiple functional units may be physically performed in a single part, or operations of a single functional unit may be physically performed by multiple parts. The order of steps in the above described sequences and flowcharts according to an embodiment may be changed as long as there is no contradiction. For the sake of convenience, the user apparatus UE and the base station eNB are described by using functional block diagrams. These apparatuses may be implemented by hardware, by software, or by combination of both. The software which is executed by a processor included in a user apparatus UE according to an embodiment and the software which is executed by a processor included in a base station eNB may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

Note that in the above embodiments, the moving speed measuring unit 205 is an example of a speed measuring unit. The reception quality measuring unit 204 is an example of a quality measuring unit. The configuration information acquisition unit 203 is an example of an acquisition unit.

The present application is based on and claims the benefit of priority of Japanese Priority Application No. 2015-218986 filed on November 6, 2015, the entire contents of which are hereby incorporated by reference.

### DESCRIPTION OF REFERENCE SIGNS

- UE: user apparatus
- eNB: base station
- 101: signal transmission unit
- 102: signal receiving unit
- 103: generating unit
- 201: signal transmission unit
- 202: signal receiving unit
- 203: configuration information acquisition unit
- 204: reception quality measuring unit
- 301: RE module
- 302: BB process module
- 303: apparatus control module
- 304: communication IF
- 401: RE module
- 402: BB process module
- 403: apparatus control module
- 404: SIM slot

## Claims

1. A user apparatus of a radio communication system, the user apparatus comprising:
a speed measuring unit configured to measure a moving speed of the user apparatus; and
a quality measuring unit configured to detect a cell or to measure reception quality of the cell in accordance with a measurement condition corresponding to the measured moving speed of the user apparatus, based on the measurement condition permitted for detecting the cell or permitted for measuring the reception quality of the cell, the measurement condition being defined depending on the moving speed of the user apparatus, and based on the moving speed of the user apparatus measured by the speed measuring unit.

2. The user apparatus according to claim 1, wherein the speed measuring unit is configured to measure the moving speed of the user apparatus within a moving speed determination time, and
wherein, upon detecting that the moving speed of the user apparatus changes, the reception quality measuring unit is configured to update the measurement condition after an updatable period has elapsed.

3. The user apparatus according to claim 2, further comprising:
an acquisition unit configured to obtain, from a base station, configuration information including the measurement condition, the moving speed determination time, and the updatable period.

4. The user apparatus according to any one of claims 1 to 3, wherein the measurement condition is defined for each frequency of a cell to be measured.

5. The user apparatus according to any one of claims 1 to 4, wherein the measurement condition is applied to a secondary cell that is in an active state in carrier aggregation.

6. A base station of a radio communication system, the base station comprising:
a generating unit configured to generate configuration information including a measurement condition permitted for detecting a cell or permitted for measuring reception quality of the cell, the measurement condition being defined depending on a moving speed of a user apparatus; and
a transmitter configured to transmit the configuration information to the user apparatus.

7. A measurement method executed by a user apparatus of a radio communication system, the measurement method comprising:
measuring a moving speed of the user apparatus; and
detecting a cell or measuring reception quality of the cell in accordance with a measurement condition corresponding to the measured moving speed of the user apparatus based on the measurement condition permitted for detecting the cell or permitted for measuring the reception quality of the cell, the measurement condition being defined depending on the moving speed of the user apparatus, and based on the measured moving speed of the user apparatus measured.

8. A measurement condition reporting method executed by a base station of a radio communication system, the measurement condition reporting method comprising:
generating configuration information including a measurement condition permitted for detecting a cell or permitted for measuring reception quality of the cell, the measurement condition being defined depending on a moving speed of a user apparatus; and
transmitting the configuration information to the user apparatus.
